(19) Europäisches Patentamt
European Patent Office
Office européen des brevets

(11) **EP 2 350 976 B1**

(12) **EUROPÄISCHE PATENTSCHRIFT**

(45) Veröffentlichungstag und Bekanntmachung des Hinweises auf die Patenterteilung:
**18.06.2014 Patentblatt 2014/25**

(21) Anmeldenummer: **09776805.5**

(22) Anmeldetag: **23.06.2009**

(51) Int Cl.:
**G06T 5/40** (2006.01)     **G06T 5/00** (2006.01)

(86) Internationale Anmeldenummer:
**PCT/EP2009/004500**

(87) Internationale Veröffentlichungsnummer:
**WO 2010/003541 (14.01.2010 Gazette 2010/02)**

(54) **VERFAHREN ZUR VERBESSERUNG DES KONTRASTES VON RÖNTGENBILDERN UND VORRICHTUNG ZU SEINER DURCHFÜHRUNG**

METHOD FOR IMPROVING THE CONTRAST OF X-RAY IMAGES AND DEVICE FOR CARRYING OUT SAID METHOD

PROCÉDÉ D'AMÉLIORATION DU CONTRASTE D'IMAGES RADIOGRAPHIQUES ET DISPOSITIF EN VUE DE SON EXÉCUTION

(84) Benannte Vertragsstaaten:
**AT BE BG CH CY CZ DK EE ES FI FR GB GR HR HU IE IS IT LI LT LU LV MC MK MT NL NO PL PT RO SE SI SK TR**

(30) Priorität: **06.07.2008 DE 102008032686**

(43) Veröffentlichungstag der Anmeldung:
**03.08.2011 Patentblatt 2011/31**

(73) Patentinhaber: **THOMS, Prof. Dr. Michael**
**91054 Erlangen (DE)**

(72) Erfinder: **THOMS, Michael**
**74321 Bietigheim-Bissingen (DE)**

(74) Vertreter: **Meissner, Bolte & Partner GbR**
**Anwaltssozietät GbR**
**Bankgasse 3**
**90402 Nürnberg (DE)**

(56) Entgegenhaltungen:
EP-A- 1 316 919      WO-A-2005/091219
WO-A-2007/050340     GB-A- 2 319 685
JP-A- 2002 232 728   JP-A- 2006 121 232
US-A- 5 317 427      US-A- 5 544 258
US-A- 5 748 802      US-A- 5 799 106
US-A1- 2007 165 282  US-A1- 2007 165 947
US-A1- 2007 286 523  US-B1- 6 661 917

• GONZALES R C ET AL: "Digital Image Processing" DIGITAL IMAGE PROCESSING, READING, ADDISON WESLEY, US, 1. Januar 1992 (1992-01-01), Seiten 139-160,173, XP002187343
• PIZER S M ET AL: "ALGORITHMS FOR ADAPTIVE HISTOGRAM EQUALIZATION" PROCEEDINGS OF THE SPIE - THE INTERNATIONAL SOCIETY FOR OPTICAL ENGINEERING, SPIE, PO BOX 10 BELLINGHAM WA 98227-0010 USA, Bd. 671, 1. April 1986 (1986-04-01), Seiten 132-138, XP001011859 ISSN: 0277-786X
• PIZER S M ET AL: "ADAPTIVE HISTOGRAM EQUALIZATION AND ITS VARIATIONS", COMPUTER VISION GRAPHICS AND IMAGE PROCESSING, ACADEMIC PRESS, DULUTH, MA, US, vol. 39, no. 3, 1 September 1987 (1987-09-01), pages 355-368, XP001002914,
• JAMES H. GRUBEN ET AL: "Scene-based algorithm for improved FLIR performance", PROCEEDINGS OF SPIE, vol. 4030, 17 July 2000 (2000-07-17), pages 184-195, XP055059738, ISSN: 0277-786X, DOI: 10.1117/12.391779
• SETH WEITH-GLUSHKO ET AL: "Quantitative analysis of infrared contrast enhancement algorithms", PROCEEDINGS OF SPIE, vol. 6543, 27 April 2007 (2007-04-27), page 65430S, XP055059742, ISSN: 0277-786X, DOI: 10.1117/12.720092

EP 2 350 976 B1

- **JERRY SILVERMAN: "Signal-processing algorithms for display and enhancement of IR images", PROCEEDINGS OF SPIE, vol. 2020, 1 November 1993 (1993-11-01), pages 440-450, XP055059746, ISSN: 0277-786X, DOI: 10.1117/12.160564**
- **VICKERS V E: "PLATEAU EQUALIZATION ALGORITHM FOR REAL-TIME DISPLAY OF HIGH-QUALITY INFRARED IMAGERY", OPTICAL ENGINEERING, SOC. OF PHOTO-OPTICAL INSTRUMENTATION ENGINEERS, BELLINGHAM, vol. 35, no. 7, 1 July 1996 (1996-07-01), pages 1921-1926, XP000631013, ISSN: 0091-3286, DOI: 10.1117/1.601006**

**Beschreibung**

Die Erfindung betrifft ein Verfahren zur Verbesserung des Kontrastes von Röntgenbildern gemäß dem Oberbegriff des Anspruches 1 sowie eine Vorrichtung zu seiner Durchführung.

Verschiedene Messverfahren liefern als Ergebnisse Grauwertbilder. Hierzu gehören die Bilder, die bei der Durchstrahlung von Werkstücken und Patienten mit Röntgenstrahlen erhalten werden. Bei anderen Messverfahren werden Farbbilder erhalten.

Es ist bekannt, dass man die Erkennbarkeit von Strukturen in Grauwertbildern dadurch verbessern kann, dass man Helligkeitsunterschiede stärker hervorhebt. Diese Hervorhebung erfolgt in der Praxis z.B. unter Verwendung von Kennlinien, die einem vorgegebenen Grauwert eines Ausgangsbildes einen hiervon verschiedenen Grauwert eines modifizierten Bildes zuordnen. Oft werden Kennlinien verwendet, die sich analytisch darstellen lassen, insbesondere lineare, polynomische (inkl. gebrochener Exponenten) oder logarithmische Kennlinien.

Generell gilt, dass der Kontrast umso stärker verbessert wird, je steiler die verwendete Kennlinie im jeweiligen Grauwertbereich ist. Mit dem Kontrast wächst dann auch die Erkennbarkeit von Objekten im betrachteten Grauwertbereich.

Die bekannten Kennlinien können entweder im Bereich niederer Grauwerte oder im Bereich höherer Grauwerte den Kontrast verbessern. Im jeweils anderen Bereich, also dem höherer Grauwerte bzw. niederer Grauwerte wird die die Strukturerkennung erschwert.

Verfahren zur Bearbeitung von Bildern sind beispielsweise bekannt aus der US-A-5 748 802, US-B1-6 661 917, JP 2002 232728 A, JP 2006 121232 A, US 5 544 258 A sowie aus PIZER S M ET AL: "ALGORITHMS FOR ADAPTIVE HISTOGRAM EQUALIZATION", PROCEEDINGS OF THE SPIE - THE INTERNATIONAL SOCIETY FOR OPTI-CAL ENGINEERING, SPIE, PO BOX 10 BELLINGHAM WA 98227-0010 USA, Bd. 671, 1. April 1986 (1986-04-01), Seiten 132 - 138.

Bei Farbbildern hat man anstelle eines einzigen Pixelkennwertes (Grauwert) mehrere Pixelkennwerte, die zur vollständigen Beschreibung eines Pixels notwendig sind:

Die Farbe, die Farbsättigung und die Intensität. Bei jedem dieser Kennwerte oder einer Mehrzahl dieser Kennwerte kann man zur Kontrastverschärfung eines Farbbildes ansetzen.

Durch die vorliegende Erfindung soll ein Verfahren zur Verbesserung des Kontrastes von Röntgenbildern angegeben werden, das gleichzeitig in verschiedenen Bereichen eines Pixelkennwertes eine Kontrastverbesserung erbringt.

Diese Aufgabe ist erfindungsgemäß gelöst durch ein Verfahren mit den im Anspruch 1 angegebenen Merkmalen.

Bei dem erfindungsgemäßen Verfahren berechnet man von einem Ausgangsbild zwei modifizierte Bilder unter Verwendung zweier verschiedener Kennlinien, die jeweils für einen Kennwertbereich eine gute Kontrastverbesserung bewerkstelligen können. Diese modifizierten Bilder werden dann überlagert, und man erhält ein modifiziertes Gesamtbild, bei welchem in den entsprechenden Kennwertbereichen eine Kontrastverbesserung erhalten wird.

Alternativ kann man zwei verschiedene Kennlinien, die bezüglich der Kontrastverbesserung unterschiedlich arbeiten, sich insbesondere ergänzen, zu einer Hybrid-Kennlinie zusammensetzen und mit dieser ein Ausgangsbild in ein kontrastreicheres modifiziertes Bild umsetzen.

Für viele Fälle wird es ausreichen, zwei verschiedene Kennlinien zur Berechnung zweier modifizierter Bilder zu verwenden, von denen die eine Kennlinie im Bereich kleinerer Grauwerte steile Abschnitte hat, die andere Kennlinie im Bereich größerer Kennwerte eine größere Steigung aufweist.

Über die Wahl der Kennlinie kann nicht nur das Maß der Kontrastverbesserung in den einzelnen Kennwertbereichen vorgeben, sondern auch die Ausdehnung der Kennwertbereiche, über die hinweg eine Kontrastverbesserung erfolgt.

Vorteilhafte Weiterbildungen der Erfindung sind Gegenstand von Unteransprüchen.

Mit der Weiterbildung der Erfindung gemäß Anspruch 2 kann man die Kontrastverbesserung für die verschiedenen Kennwertbereiche in unterschiedlichem Ausmaße in das modifizierte Gesamtbild übernehmen.

Dabei kann man bei einem Verfahren gemäß Anspruch 2 leicht diejenige Gewichtung bestimmen, die insgesamt zur besten Kontrastverbesserung führt, was z. B. durch visuelle Betrachtung des modifizierten Gesamtbildes möglich ist. Man kann die Verstellung der Gewichtung aber auch automatisch unter Verwendung eines Programmes vornehmen, welches die Güte des Kontrastes automatisch auswertet und optimiert. Solche Programme können z. B. in einem Bild nach Linien suchen und die Gesamtlänge der detektierten Linien als Leistungszahl für die Güte der jeweils eingestellten Gewichtung nehmen und die Gewichtung automatisch so variieren, dass diese Leistungszahl ihr Maximum erreicht.

Die Verwendung einer Kennlinie gemäß Anspruch 4 verbessert die Erkennbarkeit von Strukturen in Bildbereichen mit hohen Kennwerten.

Die Verwendung einer Kennlinie, wie sie im Anspruch 3 angegeben ist, verbessert die Erkennbarkeit von Strukturen bei kleinen Kennwerten.

Die in Anspruch 5 angegebene Vorrichtung erlaubt mit einfachen Hardwaremitteln und übersichtlichen Programmen die Kontrastverbesserung eines Ausgangsbildes in unterschiedlichen Kennwertbereichen.

Dabei kann ein Benutzer bei einer Vorrichtung gemäß Anspruch 6 leicht durch Versuch die optimale Kontrastverbesserung für ein Ausgangsbild einstellen. Wie oben schon dargelegt, kann man die optimale Kontrastverbesserung auch unter Verwendung eines Rechenkreises bzw. einer Routine durchführen, die eine Kontrast-Leistungszahl aus der Gesamtlänge der erkannten Linien berechnet.

Auch die Weiterbildung der Erfindung gemäß Anspruch 7 erlaubt es mit einfachen Mitteln, eine Kontrastverbesserung in unterschiedlichen Kennwertbereichen zu erhalten.

Dabei ist es gemäß Anspruch 8 für einen Benutzer besonders einfach, die optimale Kontrastverbesserung in den ihn interessierenden Bildbereichen einzustellen.

Nachstehend wird die Erfindung anhand von Ausführungsbeispielen unter Bezugnahme auf die Zeichnung näher erläutert. In dieser zeigen:

Figur 1 ein Blockschaltbild eines Röntgen oder Video-Aufnahmegerätes mit Verbesserung des Kontrastes eines Grauwert-Ausgangsbildes;

Figur 2 ein Blockschaltbild eines Röntgen-Aufnahmegerätes mit abgewandelter Verbesserung des Kontrastes eines Grauwert-Ausgangsbildes;

Figur 3 eine schematische seitliche Anordnung einer Probe zum Bestimmen der Qualität der Fehlerdetektion in einem Röntgen-Aufnahmegerät ;

Figur 4 eine Aufsicht auf einen Prüfkörper der Probe nach Figur 3;

Figur 5 eine Fotographie eines Grauwert-Ausgangsbildes, welches ein Röntgenbild darstellt, welches man durch Durchstrahlung einer Probe nach Figur 3 erhält;

Figur 6 eine Darstellung der Häufigkeitsverteilung der Grauwerte im Grauwert-Ausgangsbild der Probe nach Figur 3;

Figur 7 eine schematische Darstellung einer kombinierten Kennlinie HK, welche man durch Zusammensetzen einer linear anwachsenden Kennlinie K1 und einer häufigkeitsbasierten Kennlinie K2 erhält, die vom Histogramm gemäß Figur 3 abgeleitet ist;

Figur 8 einen Vergleich zwischen dem Grauwert -Ausgangsbild von Figur 2 mit einem modifizierten Bild, welches unter Verwendung der Hybrid-Kennlinie nach Figur 7 erhalten wurde;

Figur 9 eine ähnliche Darstellung wie Figur 6, wobei jedoch das Histogramm nach oben amplitudenbegrenzt wurde;

Figur 10 eine ähnliche Ansicht wie Figur 7, wobei jedoch das amplitudenbegrenzte Histogramm nach Figur 9 verwendet wurde;

Figur 11 einen Vergleich zwischen dem Ausgangsbild und einem modifizierten Bild, wie es unter Verwendung der Hybrid-Kennlinie nach Figur 10 erhalten wurde;

Figur 12 eine ähnliche Ansicht wie Figur 11, wobei jedoch die Amplitudenbegrenzung rauschabhängig vorgenommen wurde;

Figur 13 eine Kennlinie, die denen nach den Figuren 7 und 10 ähnlich ist, jedoch unter Verwendung des Histogramms nach Figur 12 gewonnen wurde; und

Figur 14 einen Vergleich zwischen dem Ausgangsbild und einem modifizierten Gesamtbild, wie es unter Verwendung der Kennlinie nach Figur 13 erhalten wurde.

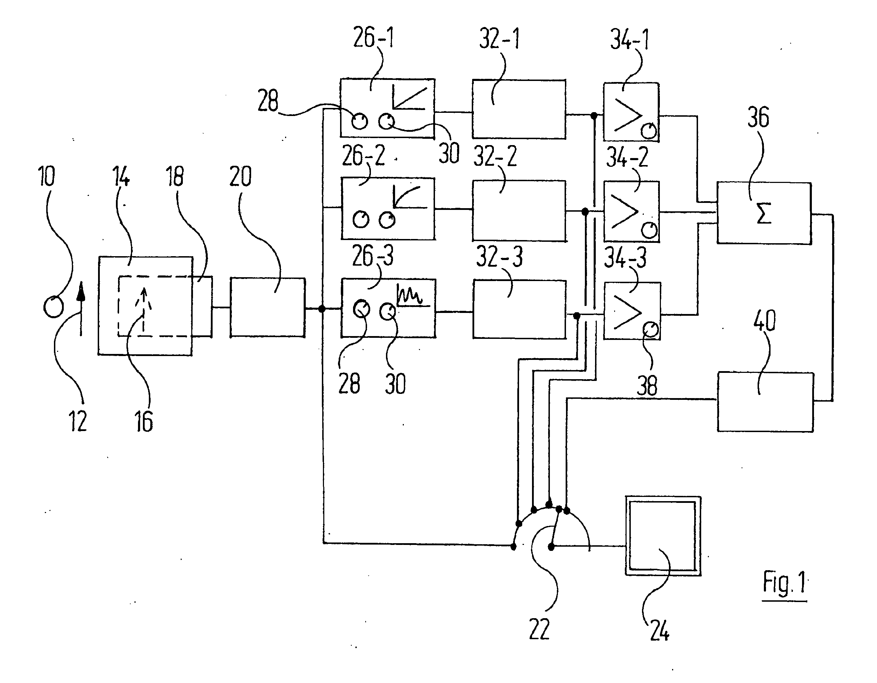

Figur 1 zeigt eine Röntgenquelle 10, die einen Schatten eines Objektes 12 auf einen röntgenempfindlichen Bildwandler 14 wirft, der z. B. ein CCD-Wandler sein kann, der mit einer Röntgen-Szintillationsschicht belegt ist.

Alternativ kommt als Bildträger eine Speicherplatte in Frage, auf der ein latentes Bild in Form metastabiler angeregter Farbzentren erzeugt wird, welches durch einen passenden Scanner ausgelesen. Das gestrichelt angedeutete Bild 16 des Objektes 12 wird über eine Betriebsschaltung 18 des Bildwandlers 14 oder den Bildplattenscanner ausgelesen und als GrauwertAusgangsbild bereitgestellt.

Letzteres wird zum einen auf einen Bildspeicher 20 gegeben, der so das nicht bearbeitete Ausgangsbild enthält. Der Bildspeicher 20 kann über einen Umschalter 22 mit einem Monitor 24 verbunden werden, auf dem ein Benutzer das Durchstrahlungsbild des Objektes 12 beurteilen kann.

Der Ausgang des Bildspeichers 18 ist ferner mit einem ersten Kennlinienkreis 26-1 verbunden, der, z.B. wie schematisch dargestellt nach einer linear ansteigenden Kennlinie arbeitet. Der Kennlinienkreis 26 multipliziert den Grauwert jedes Pixels des Ausgangsbildes mit einem Korrekturfaktor, der mit der Größe des Grauwertes linear zunimmt.

Am Kennlinienkreis 26-1 sind zwei Einstellknöpfe 28, 30 gezeigt, die dazu dienen, die Parameter der Kennlinie zu ändern. Es sind dies die Steigung der Kennlinie und deren Nullpunktsverschiebung.

Das vom Kennlinienkreis 26-1 umgerechnete modifizierte Bild wird in einem weiteren Bildspeicher 32-1 gespeichert.

Der Inhalt des Bildspeichers 32-1 wird über einen Multiplikator 34-1 auf einen ersten Eingang eines Überlagerungskreises 36 gegeben.

Der Multiplikator 34-1 hat einen Einstellknopf 38, an dem der Multiplikationsfaktor eingestellt werden kann. Der einstellbare Multiplikator 34-1 entspricht somit einem im Verstärkungsfaktor einstellbaren Verstärker.

Das Ausgangssignal des Bildspeichers 20 wird ferner auf einen Kennlinienkreis 26-2 gegeben, der nach einer wurzelförmigen Kennlinie arbeitet, im Übrigen aber dem Kennlinienkreis 26-1 vergleichbar ist. Das vom Kennlinienkreis 26-2 errechnete modifizierte Bild kommt in einen Bildspeicher 32-2 und wird über einen weiteren einstellbaren Multiplikator 34-2 auf den zweiten Eingang des Überlagerungskreises 36 gegeben.

Das Ausgangssignal des Bildspeichers 20 kommt ferner auf einen dritten Kennlinienkreis 26-3, der nach einer Grauwerthäufigskeitshistogramm-basierten Kennlinie arbeitet. Er verbessert somit den Kontrast bei den häufig vorkommenden Grauwerten. Das von ihm erzeugte modifizierte Bild wird in einem Bildspeicher 32-3 gehalten und wird gewichtet durch einen weiteren einstellbaren Multiplikator 34-3 auf einen dritten Eingang des Überlagerungskreises 36 gegeben.

Falls gewünscht, kann man die Reihe der Kennlinienkreise 26 durch weitere Kennlinienkreis erweitern, deren Kennlinien basierend auf anderen Größen vorgegeben sind. So könnte man einen weiteren Kennlinienkreis vorsehen, der stark verrauschte Bildbereiche weniger anhebt als Bildbereiche mit gutem Signal/Rauschverhältnis.

Am Ausgang des Überlagerungskreises 36 erhält man somit ein gewichtetes Gesamtbild, welches sich beim betrachteten Ausführungsbeispiel aus drei modifizierten Bildern zusammensetzt.

Das Gesamtbild kann noch einer weiteren Kontrastverbesserung unterzogen werden, die im Ortsfrequenzraum oder Längenraum vorgenommen wird. Hierzu gehören die Fourier-Transformation des Eingangsbildes und die Betonung hochfrequenter Komponenten des Fourier-Bildes. Nach Rücktransformation in den Ortsraum erhält man dann ein nochmals kontrastverbessertes Bild, wobei diese Kontrast - Verbesserung auf Überlegungen bezüglich der Größe zu detektierender Strukturen beruht.

Ein entsprechender Fourier-Kontrastverbesserungskreis ist in der Zeichnung bei 40 dargestellt.

Beim oben beschriebenen Ausführungsbeispiel nach Figur 1 wurde das Ausgangsbild unter Verwendung der verschiedenen Kennlinien in verschiedene modifizierte Bilder umgesetzt, die dann gewichtet zusammengesetzt wurden.

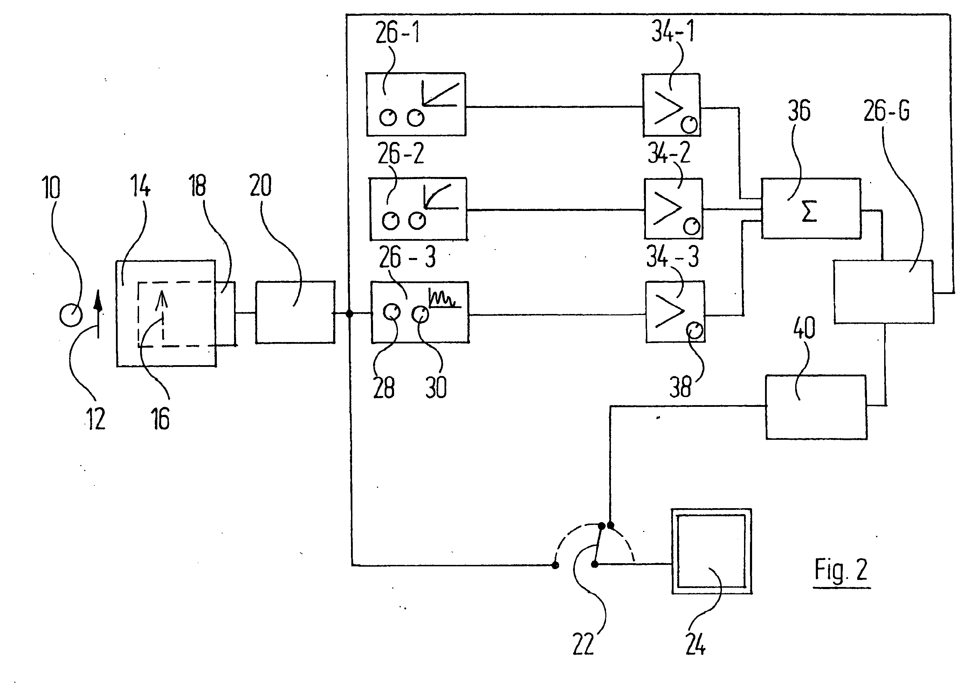

Alternativ kann man gemäß Figur 2 auch die Kennliniengewichte zusammensetzen und unter Verwendung der Hybrid-Kennlinie nur ein einziges modifiziertes Bild berechnet werden. Man benötigt dann weniger Speicher und weniger Rechenoperationen.

Andererseits hat die Schaltung nach Figur 1 den Vorteil, dass man die modifizierten Teilbilder auch einzeln ansehen kann und so den Einfluss der verschiedenen Korrekturmöglichkeiten besser einzeln beurteilen kann. Dies kann die Gesamtoptimierung der Kontrastverbesserung erleichtern.

In Figur 2 sind Elemente, die unter Bezugnahme auf Figur 1 schon erläutert wurden, wieder mit denselben Bezugszeichen versehen, auch wenn sie in Einzelheiten unterschiedlich sind. Nachstehend wird nur auf die Unterschiede eingegangen. Die Kennlinienkreise 26-1, 26-2 und 26-3 sind so beschaffen, dass sie nur eine Kennlinie K1, K2 bzw. K3 bereitstellen. Die Bildspeicher 32 sind entfallen, und der Überlagerungskreis 36 addiert die gewichteten Kennlinien.

Ein weiterer Kennlinienkreis 26-G erhält vom Überlagerungskreis 36 eine durch gewichtete Überlagerung der Kennlinien K1, K2 und K3 der Kennlinienkreise 26-1, 26-2 und 26-3 erhaltene Hybridkennlinie HK und modifiziert das auf ihn gegebene Ausgangsbild gemäß der Hybridkennlinie HK.

Das so erhaltene modifizierte Gesamtbild wird wieder auf den Fourier-Kontrastschärfungskreis 40 gegeben.

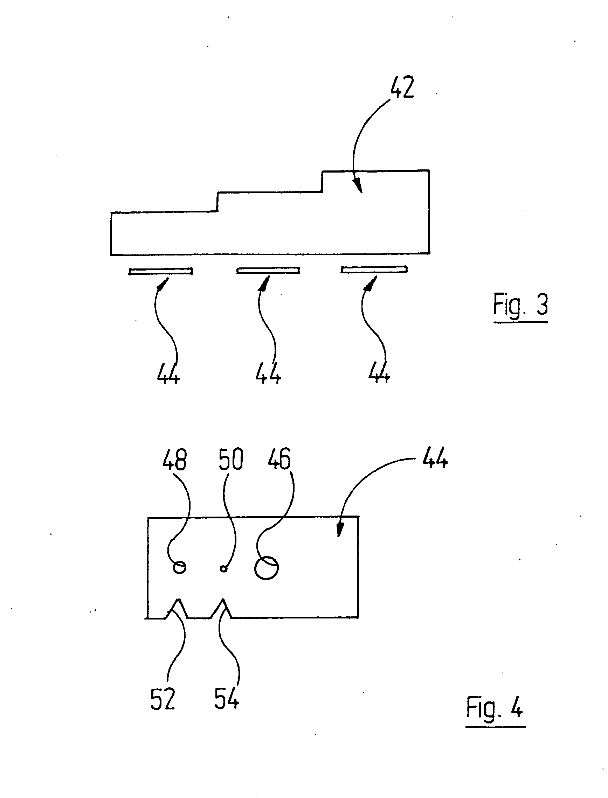

Figur 3 zeigt einen Abschwächerkörper 42, der aus Aluminium gefertigt ist und drei Stufen unterschiedlicher Höhe aufweist.

Unterhalb der Stufen des Abschwächerkörpers 40 sind drei Prüfkörper 44 angeordnet, die aus einem dünnen Blech bestehen, welches mit drei Bohrungen 46, 48, 50 abnehmenden Durchmessers versehen ist.

Zwei größere dreieckige randständige Marken 52, 54 zeigen die Lage der schwerer zu detektierenden kleineren Bohrungen 48 und 50 an.

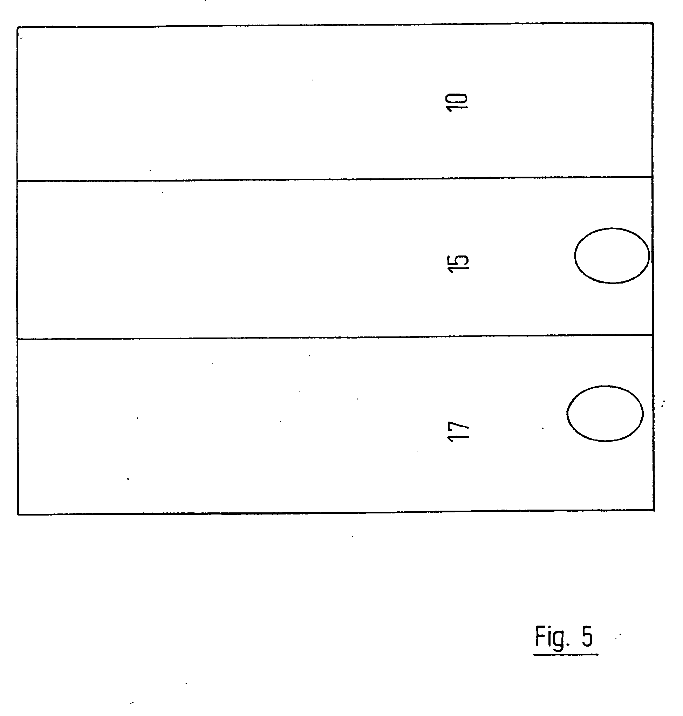

Unter Bezugnahme auf die Figuren 5 ff. werden nunmehr Gesichtspunkte bei der Auswahl der im Kennlinienkreis 26 verwendeten Kennlinien besprochen.

Figur 5 zeigt das Ausgangsbild, welches man bei Durchstrahlung der durch Abschwächerkörper 42 und Prüfkörper 44 gebildeten Probe enthält. Die Stufen des Abschwächerkörpers sind erkennbar, die hinter dem Abschwächerköper 40 liegenden Prüfkörper 44 sind für das Auge praktisch nicht sichtbar.

Das Ausgangsbild hat insgesamt 1,5 Millionen Pixel.

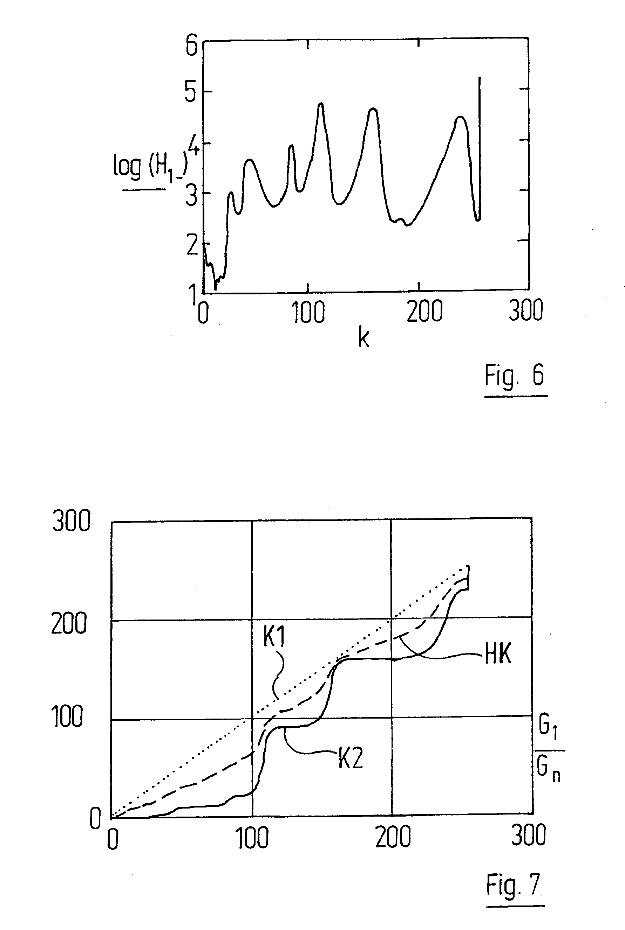

Das in Figur 6 gezeigte Histogramm trägt im logarithmischen Maßstabe die Häufigkeit der Pixel über dem Grauwert auf. Die Auflösung des Grauwertes k erfolgt mit 8 Bit entsprechend $2^8 = 256$ Graustufen. Als Maß für den Grauwert dient dann eine Zahl zwischen 0 und 255.

Man erkennt, dass das Histogramm einige ausgeprägte Maxima aufweist, die Stufen des Abschwächerkörpers 42 und den für das Auge nicht sichtbaren Prüfkörpern 44 zuzuordnen sind. Dies deshalb, weil das Bild gemäß der Treppenstruktur des Abschwächerkörpers drei Bereiche aufweist, in denen die Grauwerte der Pixel in etwa gleich sind. Indem man in diesen Bereichen die Steilheit der Kennlinie erhöht, wird somit gerade dort der Kontrast verbessert. Dies kann man dadurch bewerkstelligen, dass man direkt das akkumulierte Histogramm als Kennlinie verwendet.

Es wird dann aber herausgefunden, dass in den Bereichen hoher Häufigkeit der Grauwerte eine Überbetonung stattfindet, wodurch das Rauschen im betrachteten Bildbereich zu stark angehoben wird, so dass die Sichtbarkeit der der Prüfkörper nicht weiter verbessert wird.

In diesem Zusammenhang sei angemerkt, dass die Erkennung von Strukturen mit dem Auge dem Rechnung tragen muss, dass das Auge unterhalb eines Schwellenkontrastes keine Strukturen erkennen kann.

Nimmt man nun eine Kennlinie, die zum Teil einfach linear mit dem Grauwert zunimmt, so kann man den oben geschilderten Nachteil der bloßen Histogrammanpassung mindern. Eine solche lineare Kennlinie K1 ist in Figur 7 gestrichelt eingezeichnet.

Bildet man nun eine neue Kennlinie, welche man durch gewichtetes Zusammensetzen der linearen Kennlinie K1 und einer Histogramm-Kennlinie K2 erhält, erhält man eine Hybrid-Kennlinie HK, die zwischen der linearen Kennlinie K1 und der Hybrid-Kennlinie K2 liegt.

Diese mittlere Kennlinie ist in Figur 7 für gleiche Beträge von linearer Kennlinie K1 und Histogramm-Kennlinie K2 eingezeichnet.

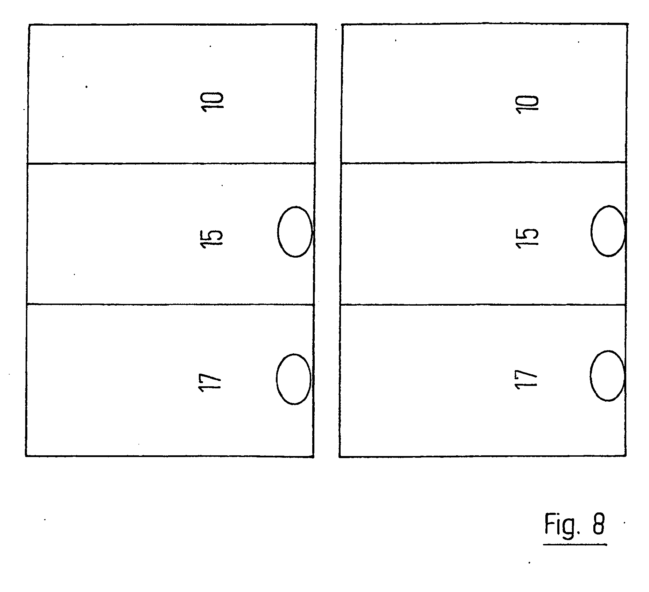

Mit dieser Hybrid-Kennlinie HK erhält man dann die in Figur 8 gezeigten Ergebnisse. Im in Figur 8 links gelegenen modifizierten Gesamtbild erkennt man deutlich den Schatten der rechteckigen Prüfkörper 44 und das größte seiner Löcher. Im in Figur 5 rechts gezeichneten Ausgangsbild ist ein Schatten des Prüfkörpers gerade noch obersten Bildstreifen erkennbar, wenn man hiernach gezielt sucht.

Bezeichnet man die lineare Kennlinie mit K1, die Histogramm-Kennlinie mit K2, so gilt für die Gesamt-Kennlinie oder Hybrid-Kennlinie HK

$$\texttt{HK = (1 - a) x K1 + a x K2.}$$

Man erkennt, dass man durch Variation des Parameters a die Beiträge der Kennlinien K1 und K2 zur Gesamt-Kennlinie HK stufenlos ändern kann.

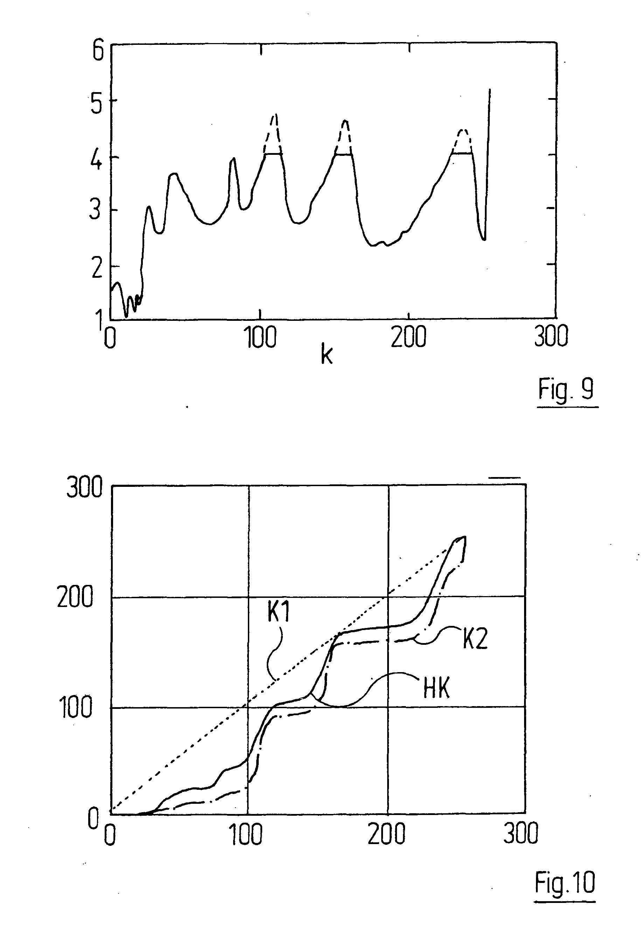

Figur 9 zeigt das Histogramm von Figur 6, bei welchem jedoch die Häufigkeitsspitzen, welche über der Ordinate "4" liegen, gekappt wurden.

Figur 10 zeigt die Gesamt-Kennlinie HK, die man wieder aus K1 und K2 mit a = 0,5 erhält. Man erkennt, dass die GesamtKennlinie in der Nachbarschaft der Maxima der Häufigkeitspunkte weniger stark ansteigt.

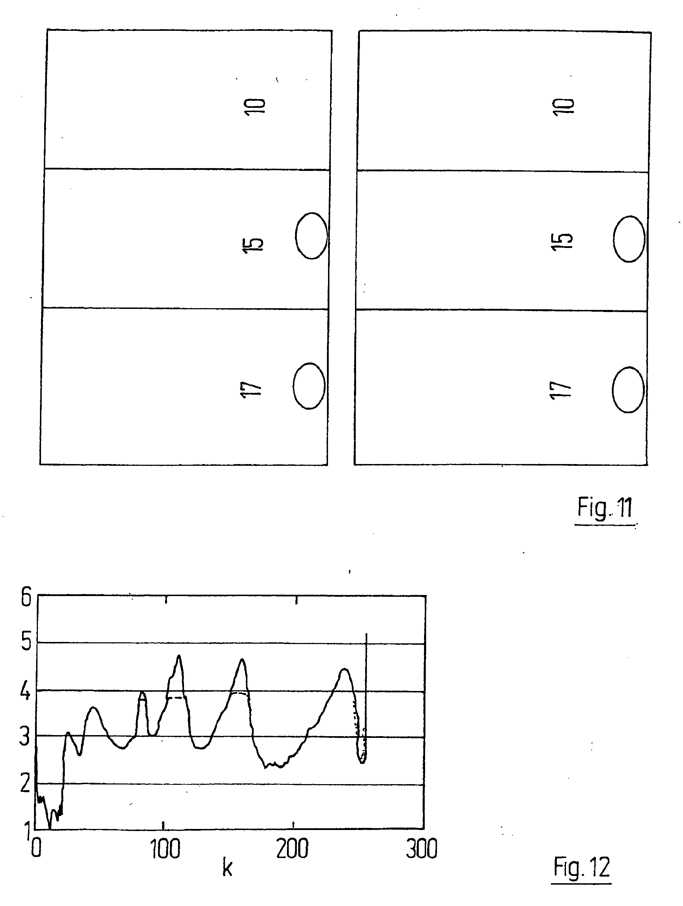

Figur 11 zeigt das hiermit erhaltene modifizierte Gesamtbild (links) im Vergleich mit dem Ausgangsbild (rechts, Man erkennt, dass das modifizierte Teilbild weniger verrauscht ist als im in Figur 8 gezeigten modifizierten Teilbild, die Ränder des Prüfkörpers und seine Strukturen aber immer noch gut sichtbar sind.

Gemäß Figur 12 erfolgt eine k-abhängige Begrenzung der Häufigkeitskurve. Die Amplitude wird erfindungsgemäß gemäß der Wurzel aus k reduziert, so dass man einen leichten Anstieg der nach dem Begrenzen erhaltenen Plateaus der Häufigkeitsspitzen erhält.

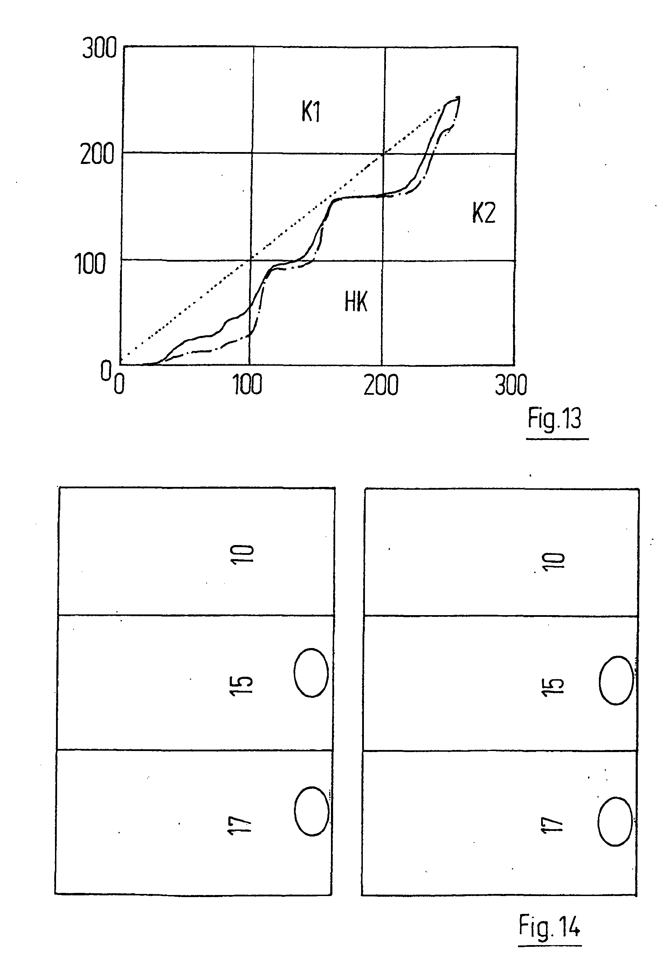

Figur 13 zeigt eine Gesamtkennlinie HK, welche basierend auf der Histogramm-Kennlinie von Figur 12 erhalten wurde, die gemäß der Wurzel aus den Grauwert -Amplituden begrenzt wurde.

Das mit der Gesamtkennlinie HK von Figur 13 erhaltene modifizierte Gesamtbild ist in Figur 14 wieder dem Ausgangsbild gegenübergestellt.

Man erkennt, dass auch auf diese Weise ein rauscharmes modifiziertes Gesamtbild erhalten wird, welches für kleine und mittlere Grauwerte ebenfalls gute Ergebnisse liefert, für hohe Grauwerte etwas schlechter ist als für die Kennlinie HK von Figur 10. Bezüglich des Rauschens kann aber das Bild ebenfalls zufriedenstellen. Es versteht sich, dass man Kombinations-Kennlinien auch auf andere Weise herstellen kann, indem man für die Kennlinie K1 andere Funktionen als eine lineare Gerade verwendet, z. B. eine Logarithmusfunktion. Hierdurch werden dann die Steigungen in denjenigen Bereichen der Kennlinie K, die hohen K-Werten entsprechen, wieder ausgeprägter.

Beim oben beschriebenen Ausführungsbeispiel nach Figur 1 wurde das Ausgangsbild unter Verwendung der verschiedenen Kennlinien in verschiedene modifizierte Bilder umgesetzt, die dann gewichtet zusammengesetzt wurden.

Alternativ kann man auch die Kennliniengewichte zusammensetzen und unter Verwendung der Hybrid-Kennlinie nur ein einziges modifiziertes Bild berechnet werden. Man benötigt dann weniger Speicher und weniger Rechenoperationen.

Andererseits hat die Schaltung nach Figur 1 den Vorteil, dass man die modifizierten Teilbilder auch einzeln ansehen kann und so den Einfluss der verschiedenen Korrekturmöglichkeiten besser einzeln beurteilen kann. Dies kann die GesamtOptimierung der KontrastVerbesserung erleichtern.

Weitere Abwandlungen sind wie folgt möglich:

Das oben beschriebene Verfahren kann auch auf gleitende Bildausschnitte angewandt werden.

Statt einer festen Funktion für eine k-abhängige Kappung der über einem Schwellwert $H_s$ liegenden Spitzen der Häufigkeitsfunktion H(k) , z.B. einer Kappung gemäß einer Wurzelfunktion, wie in Verbindung mit Figur 12 erläutert, kann man auch eine schwächer als linear anwachsende Funktion auf das gesamte Histogramm anwenden, um z.B. eine modifiziertes Histogramm H*(k) zu H* = SQRT(H(k)) zu bestimmen. Dies hat den Vorteil, dass das modifizierte Histogramm H*(k) keine Kanten aufweist, wie dies bei der Treppenfunktion der Fall wäre.

Allgemein hat ein solches modifiziertes Histogramm die Form

$$H*(k) = f(H(k),k),$$

wobei die Abbildungsfunktion vorzugsweise eine stetige und vorzugsweise weniger als linear anwachsende Funktion ist.

Erfindungsgemäß werden stückweise stetige modifizierte Histogramme H* (k) verwendet:

$$H*(k) = H \text{ für } H(k) < H_S \ (H_S = \text{Schwellwert})$$

$$H_*(k) = f(H(k),K) \text{ für } H(k) \geq H_S$$

Dabei kann z.B. f(H(k),k) zu a x SQRT (H(k)) gewählt werden, wie oben angesprochen, wobei a ein Parameter ist, der die Stufenfreiheit des modifizierten Histogramms bei $H_S$ gewährleistet: a=SQRT ($H_S$).

Obenstehend wurde die Kontrastverschärfung anhand von Grauwertbildern beschrieben. Das oben beschriebene Verfahren lässt sich gleichermaßen verwenden bei Farbbildern. Diese unterscheiden sich von den Grauwertbildern, bei denen ein Pixel nur einen Pixelkennwert (den Grauwert) haben, dadurch, dass ein Pixel mehrere Pixelkennwerte auf-weist, nämlich die Farbe, die Farbsättigung und die Helligkeit.

Für jeden dieser Pixelkennwerte kann man Histogramme erstellen, wie dies obenstehend für den Grauwert im Einzelnen dargelegt wurde. Man kann dann anhand dieser Histogramme Farbe und/oder Farbsättigung und/oder Helligkeit modifizieren, wie oben für Grauwerte dargestellt.

Bei einem Farbbild bestehen nun aber zusätzliche Möglichkeiten zur besseren Visualisierung von Kontrasten, die darin bestehen, dass man nicht nur die Helligkeit so anhand eines Histogramms modifiziert, dass der Kontrast verbessert wird, sondern auch Farbe und/ oder Farbsättigung auf diese Weise ändert. Die zu erkennenden Strukturen werden dann durch eine "Falschfarbe" zusätzlich herausgehoben.

**Patentansprüche**

1. Verfahren zur Verbesserung des Kontrastes von Röntgenbildern, bei dem Pixelkennwerte k eines Ausgangsbildes unter Verwendung einer Kennlinie in Pixelkennwerte k eines modifizierten Bilds umgerechnet werden und entweder die Pixelkennwerte k des Ausgangsbildes unter Verwendung mindestens einer weiteren Kennlinie in Pixelkennwerte k eines weiteren, modifizierten Bildes umgerechnet werden und die modifizierten Bilder zu einem Gesamtbild überlagert werden,

- oder -

die Kennlinie unter Verwendung mindestens einer weiteren Kennlinie zu einer Hybrid-Kennlinie zusammengesetzt wird und die Pixelkennwerte k des Ausgangsbildes unter Verwendung der Hybrid-Kennlinie in ein modifiziertes Gesamtbild umgerechnet werden, wobei die mindestens eine weitere Kennlinie anhand einer modifizierten Häufigkeitsverteilung der Pixelkennwerte k des Ausgangsbildes ermittelt wird, **dadurch gekennzeichnet, dass** die modifizierte Häufigkeitsverteilung $H^*(k)$ mittels einer Kappung der Häufigkeitsverteilung $H(k)$ der Pixelkennwerte k des Ausgangsbildes gemäß einer Wurzelfunktion mit zunehmenden Pixelkennwerten k entsprechend der Röntgenintensität oder anhand einer Abbildungsfunktion $H^*(k) = H(k)$ für $H(k) < H_S$, $H^*(k) = f(H(k), k)$ für $H(k) \geq H_S$, wobei $H_S$ ein Schwellwert > 0 und $f(H(k),k)$ eine stetige und mit zunehmenden Pixelkennwerten k entsprechend der Röntgenintensität weniger als linear anwachsende Funktion ist, aus der Häufigkeitsverteilung $H(k)$ der Pixelkennwerte k des Ausgangsbildes gebildet wird.

2.  Verfahren nach Anspruch 1, **dadurch gekennzeichnet, dass** die modifizierten Teilbilder mit unterschiedlicher Gewichtung zum modifizierten Gesamtbild zusammengesetzt werden bzw. die Kennlinie und die weiteren Kennlinien mit unterschiedlicher Gewichtung zur Hybrid-Kennlinie zusammengesetzt werden.

3.  Verfahren nach einem der Ansprüche 1 bis 2, **dadurch gekennzeichnet, dass** die Steigung mindestens einer der Kennlinien zu hohen Pixelkennwerten hin abnimmt.

4.  Verfahren nach einem der Ansprüche 1 bis 3, **dadurch gekennzeichnet, dass** die Steigung mindestens einer der Kennlinien zumindest bereichsweise zunimmt.

5.  Vorrichtung zur Durchführung des Verfahrens nach einem der Ansprüche 1 bis 4, mit einem Bildspeicher (20), der ein Pixelkennwert-Ausgangsbild enthält, mit einem Kennlinienkreis (26), welcher unter Verwendung einer Kennlinie die Pixelkennwerte des Ausgangsbildes in ein modifiziertes Bild umrechnet, wobei mindestens ein weiterer Kennlinien-Kreis (26-2, 26-3) vorgesehen ist, welcher das Ausgangsbild unter Verwendung einer zweiten Kennlinie (K2) in ein zweites modifiziertes Bild umrechnet und durch einen Überlagerungskreis (36), welcher die beiden modifizierten Bilder zu einem Gesamtbild zusammensetzt,

- bzw. -

dass zwei Kennlinienkreise (26-1, 26-2) eine erste Kennlinie (K1) und eine zweite, von der ersten verschiedene Kennlinie (K2) bereitstellen, dass ein Kennlinien-Überlagerungskreis (36) vorgesehen ist, der die beiden Kennlinien (K1) und (K2) überlagert und dass ein Hybrid-Kennlinienkreis (26-G) aufgrund der so erhaltenen Hybrid-Kennlinie ein modifiziertes Gesamtbild berechnet.

6.  Vorrichtung nach Anspruch 5, wobei mindestens ein Mittel (28, 30) zum Einstellen mindestens eines Parameters mindestens einer der Kennlinien (K1, K2) vorhanden ist.

7.  Vorrichtung nach Anspruch 5 oder 6, wobei Mittel (36) zum Überlagern unterschiedlicher modifizierter Bilder bzw. unterschiedlicher Kennlinien (K1, K2) vorhanden sind.

8.  Vorrichtung nach Anspruch 7, wobei Gewichtungsmittel (34) für die zu überlagernden unterschiedlichen modifizierten Bilder bzw. unterschiedlichen Kennlinien vorhanden sind.

**Claims**

1.  Method to improve the contrast of X-ray images, in which pixel characteristic values k of an initial image are converted into pixel characteristic values k of a modified image using a characteristic line and either the pixel characteristic values k of the initial image are converted into pixel characteristic values k of a further modified image using at least one further characteristic line and the modified images are superimposed into a complete image,

- or -

the characteristic line is combined to form a hybrid characteristic line using at least one further characteristic line, and the pixel characteristic values k of the initial image are converted into a modified complete image using the hybrid characteristic line, wherein the at least one further characteristic line is determined by means of a modified frequency distribution of the pixel characteristic values k of the initial image, **characterised in that**, the modified frequency distribution $H^*(k)$ is formed from the frequency distribution $H(k)$ of the pixel characteristic values k of the initial image by means of a capping of the frequency distribution $H(k)$ of the pixel characteristic values k of the initial image according to a root function having increasing pixel characteristic values k corresponding to the X-ray intensity, or by means of a function of representation H*(k)=H(k) for H(k)<H$_S$, H*(k)=f(H(k),k) for H(k)≥H$_S$, wherein H$_S$ is a threshold value of > 0 and f(H(k),k) is a constant, less than linearly increasing function with increasing pixel characteristic values k corresponding to the X-ray intensity.

2. Method according to claim 1, **characterised in that** the modified partial images are combined to form the modified complete image with different weighting or the characteristic line and the further characteristic lines are combined to form the hybrid characteristic line with different weighting.

3. Method according to one of claims 1 to 2, **characterised in that** the gradient of at least one of the characteristic lines decreases towards high pixel characteristic values.

4. Method according to one of claims 1 to 3, **characterised in that** the gradient of at least one of the characteristic lines increases at least in regions.

5. Device to carry out the method according to one of claims 1 to 4, having an image memory (20), which contains a pixel characteristic value initial image, having a characteristic line circuit (26) which converts the pixel characteristic values of the initial image into a modified image using a characteristic line, wherein at least one further characteristic line circuit (26-2, 26-3) is provided, which converts the initial image into a second modified image using a second characteristic line (K2) and using a superimposing circuit (36) which combines the two modified images to form a complete image,
- or -
that two characteristic line circuits (26-1, 26-2) provide a first characteristic line (K1) and a second characteristic line (K2) that is different from the first, that a characteristic line superimposing circuit (36) is provided, which superimposes the two characteristic lines (K1) and (K2) and that a hybrid characteristic line circuit (26-G) calculates a modified complete image due to the thus-obtained hybrid characteristic line.

6. Device according to claim 5, wherein at least one means (28, 30) to set at least one parameter of at least one of the characteristic lines (K1, K2) is present.

7. Device according to claim 5 or 6, wherein means (36) to superimpose different modified images or different characteristic lines (K1, K2) are present.

8. Device according to claim 7, wherein weighting means (34) for the different modified images or different characteristic lines to be superimposed are present.

**Revendications**

1. Procédé d'amélioration du contraste d'images radiographiques, dans lequel on transforme par le calcul des valeurs k caractéristiques de pixel d'une image de départ en des valeurs k caractéristiques de pixel d'une image modifiée en utilisant une courbe caractéristique et ou bien on transforme par le calcul les valeurs k caractéristiques de pixel de l'image de départ en des valeurs k caractéristiques de pixel d'une autre image modifiée en utilisant au moins une autre courbe caractéristique et on superpose les images modifiées en une image d'ensemble,
ou
on compose la courbe caractéristique en une courbe caractéristique hybride en utilisant au moins une autre courbe caractéristique et on transforme par le calcul les valeurs k caractéristiques de pixel de l'image de départ en une image d'ensemble modifiée en utilisant la courbe caractéristique hybride, la au moins une autre courbe caractéristique étant déterminée au moyen d'une distribution de fréquence modifiée des valeurs k caractéristiques de pixel de l'image de départ, **caractérisé en ce que** l'on forme, à partir de la distribution H(k) de fréquence des valeurs k caractéristiques de pixel de l'image de départ, la distribution H*(k) de fréquence modifiée au moyen d'un écrêtage de la distribution H(k) de fréquence des valeurs k caractéristiques de pixel de l'image de départ, suivant une fonction racine, avec des valeurs k caractéristiques de pixel croissantes, correspondant à l'intensité de rayon X ou au moyen d'une fonction H*(k) = H(k) de transformation pour H(k) < H$_S$, H*(k) = f(H(k),k) pour H(k) ≥ H$_S$, H$_S$ étant une valeur de seuil > 0 et f(H(k),k) étant une fonction continue, croissante moins que linéairement avec des valeurs k caractéristiques de pixel croissantes correspondant à l'intensité des rayons X.

**2.** Procédé suivant la revendication 1, **caractérisé en ce que** l'on compose en l'image d'ensemble modifiée les images partielles modifiées avec une pondération différente ou l'on compose en la courbe caractéristique hybride la courbe caractéristique et les autres courbes caractéristiques avec une pondération différente.

**3.** Procédé suivant l'une des revendications 1 à 2, **caractérisé en ce que** la pente d'au moins l'une des courbes caractéristiques diminue en direction des valeurs caractéristiques de pixel hautes.

**4.** Procédé suivant l'une des revendications 1 à 3, **caractérisé en ce que** la pente d'au moins l'une des courbes caractéristiques augmente au moins par endroits.

**5.** Dispositif pour effectuer le procédé suivant l'une des revendications 1 à 4, comprenant une mémoire (20) d'image, qui contient une image de départ de valeur caractéristique de pixel, un circuit (26) de courbe caractéristique, qui, en utilisant une courbe caractéristique, transforme par le calcul les valeurs caractéristiques de pixel de l'image de départ en une image modifiée, au moins un autre circuit (26-2, 26-3) de courbes caractéristiques étant prévu, qui transforme par le calcul l'image de départ en une deuxième image modifiée, en utilisant une deuxième courbe (K2) caractéristique et un circuit (36) de superposition, qui compose les deux images modifiées en une image d'ensemble, ou
en ce que le circuit (26-1, 26-2) de courbes caractéristiques mette à disposition une première courbe (K1) caractéristique et une deuxième courbe (K2) caractéristique différente de la première, en ce qu'il est prévu un circuit (36) de superposition des courbes caractéristiques, qui superpose les deux courbes (K1) et (K2) caractéristiques et en ce qu'un circuit (26-G) de courbe caractéristique hybride calcule une image d'ensemble modifiée sur la base de la courbe caractéristique hybride ainsi obtenue.

**6.** Dispositif suivant la revendication 5, dans lequel il y a au moins un moyen (28, 30) de réglage d'au moins un paramètre d'au moins l'une des courbes (K1, K2) caractéristiques.

**7.** Dispositif suivant la revendication 5 ou 6, dans lequel il y a des moyens (36) de superposition d'images modifiées différentes ou de courbes (K1, K2) caractéristiques différentes.

**8.** Dispositif suivant la revendication 7, dans lequel il y a des moyens (34) de pondération des images modifiées différentes à superposer ou des courbes caractéristiques différentes.

Fig. 1

EP 2 350 976 B1

Fig. 2

42

Fig. 3

44    44    44

48    50    46    44

52    54

Fig. 4

Fig. 5

Fig. 6

Fig. 7

Fig. 8

Fig. 9

Fig.10

Fig. 11

Fig. 12

Fig.13

Fig.14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5748802 A
- US 6661917 B1
- JP 2002232728 A
- JP 2006121232 A
- US 5544258 A

**In der Beschreibung aufgeführte Nicht-Patentliteratur**

- **PIZER S M et al.** ALGORITHMS FOR ADAPTIVE HISTOGRAM EQUALIZATION. *PROCEEDINGS OF THE SPIE - THE INTERNATIONAL SOCIETY FOR OPTI-CAL ENGINEERING,* 01. April 1986, vol. 671, 132-138